# EUROPÄISCHE PATENTSCHRIFT

(11) **EP 1 591 770 B1**
(45) Veröffentlichungstag und Bekanntmachung des Hinweises auf die Patenterteilung: **11.10.2006**
(21) Anmeldenummer: 05008445.8
(22) Anmeldetag: 19.04.2005
(51) Int. Cl.: G01M 17/04

(54) **Verfahren zur Überprüfung von Schwingungsdämpfern in Kraftfahrzeugen**
Method for inspecting shock absorbers in motor vehicles
Procédé de contrôle des amortisseurs dans les véhicules automobiles

(30) Priorität: 29.04.2004 DE 102004021131
(43) Veröffentlichungstag der Anmeldung: 02.11.2005
(73) Patentinhaber: ZF FRIEDRICHSHAFEN AG, 88046 Friedrichshafen (DE)
(72) Erfinder: Sonnenburg, Reinhard, Dr., 97702 Münnerstadt (DE)

(56) Entgegenhaltungen:
- DE-A1- 2 905 931
- DE-A1- 10 017 558
- DE-A1- 10 122 405

## Beschreibung

Die Erfindung betrifft ein Verfahren zur Überprüfung von Schwingungsdämpfern in Kraftfahrzeugen gemäß dem Oberbegriff von Patentanspruch 1. Ein derartiges Verfahren ist aus der DE 10122405 A1 bekannt.

Ein Schwingungsdämpfer zählt zu den Verschleißteilen an einem Kraftfahrzeug, wobei zu berücksichtigen ist, dass ein defekter Schwingungsdämpfer maßgeblich die Fahrsicherheit des Fahrzeugs beeinflusst. Der Fahrer selbst kann die Funktionstüchtigkeit eines Schwingungsdämpfers nicht überprüfen, da die Verschlechterung der Dämpfungseigenschaft schleichend und ein permanenter Gewöhnungsprozess abläuft.

Die sicherlich beste Möglichkeit der Funktionsüberprüfung eines Schwingungsdämpfers besteht darin, den Schwingungsdämpfer aus dem Fahrzeug zu demontieren und in einer speziellen Prüfmaschine einem Prüfprogramm zu unterziehen. Diese Vorgehensweise wird in der DE 41 20 169 A1 beschrieben. Die Demontage eines Schwingungsdämpfers aus einem Fahrzeug kann insbesondere dann ziemlich teuer werden, wenn ein Federbein vorliegt, bei dem eine Fahrzeugfeder den Schwingungsdämpfer einhüllt.

Deshalb gibt es zahlreiche Versuche, einen Schwingungsdämpfer im eingebauten Zustand auf seine Funktionstüchtigkeit zu untersuchen. Ein Grundprinzip besteht darin, dass man eine Prüfvorrichtung verwendet, bei der über einen Antrieb eine Radauflage in eine Schwingbewegung versetzt wird. Anhand der Abklinkkurve kann im Vergleich zu einem neuwertigen Schwingungsdämpfer ein möglicht Defekt des eingebauten Schwingungsdämpfers erkannt werden. Die DE 195 19 136 C1 beschreibt z. B. einen derartigen Prüfstand.

Ein wesentliches Problem besteht jedoch darin, dass nicht nur der Schwingungsdämpfer, sondern auch die Achsgelenke und der Fahrzeugreifen in die Schwingungsdämpferprüfung einfließen. Durch die Verwendung eines elastischen Gliedes innerhalb des Prüfstands kann man den Einfluss des Fahrzeugreifens minimieren. In der DE 100 17 558 A1 wird dieser Zusammenhang dargestellt.

Aufgabe der vorliegenden Erfindung ist es, ein Verfahren zur Überprüfung eines im Kraftfahrzeug eingebauten Schwingungsdämpfer bereitzustellen, das ein verlässliches Prüfergebnis bietet.

Erfindungsgemäß wird die Aufgabe dadurch gelöst, dass die Federarbeit des Reifens bezogen auf eine definierte Anregung in Verbindung mit einem neuwertigen Schwingungsdämpfer als Parameter im Speicher vorliegt und die Federarbeit des Reifens bei der Überprüfung des Schwingungsdämpfers erfasst wird, wobei ab einer bestimmten Abweichung der festgestellten Federarbeit von der gespeicherten Federarbeit des Reifens von einem defekten Schwingungsdämpfer ausgegangen wird.

Versuche haben gezeigt, dass die Federarbeit eines Schwingungsdämpfers in einem definierten Verhältnis zur Federarbeit des Reifens steht. Ist die Federarbeit des Reifens in einem Fahrzeug in Verbindung mit einem neuwertigen Schwingungsdämpfer bekannt, dann kann auch die vorgesehene Dämpfarbeit eines gebrauchten Schwingungsdämpfers bestimmt werden. Eine zu große Abweichung zwischen der Federarbeit des Reifens bei einem neuwertigen und einem gebrauchten Schwingungsdämpfer ist ein eindeutiges Indiz für den Verschleißzustand des Schwingungsdämpfers.

Des weiteren ist vorgesehen, dass aus der Bewegung der Radmasse zur Radaufstandsfläche sowie der Fahrzeugaufbaubewegung und der anteiligen Aufbaumasse die Federarbeit des Reifens ermittelt wird.

In weiterer vorteilhafter Ausgestaltung des Verfahren wird eine im Fahrzeug angeordnete Sensorik zur Erfassung der Parameter für die Bestimmung der Federarbeit des Reifens verwendet. Z. B. wird ein aufbauseitiges Beschleunigungssignal in Verbindung mit einer definierten anteiligen Masse des Fahrzeugaufbaus zur Berechnung der auf den Reifen wirkenden Reifenkraft verwendet. Sofern das Fahrzeug mit einer entsprechenden Sensorik, wie mindestens einem aufbauseitigen Beschleunigungssensor und einem Radsensor, ausgestattet ist, kann auch eine Fahrbahnoberfläche als Radaufstandsfläche verwendet werden. Damit ist es möglich, dass in Intervallen oder permanent während der Fahrt die Funktionstüchtigkeit des Schwingungsdämpfers überprüft wird.

Durch eine Integralrechnung eines radseitiges Beschleunigungssignal wird der Relativweg der ungefederte Masse des Rades und der Fahrzeugachse zur Radaufstandsfläche ermittelt. Ein radseitiger Beschleunigungssensor lässt sich vergleichsweise einfach montieren und z. B. für eine eventuell vorhandene Fahrwerksregelung nutzen.

In weiterer vorteilhafter Ausgestaltung des Verfahrens wird aus dem Integral des Produkts aus Reifenkraft und Relativweg des Rades über der Zeit die Federarbeit des Reifens ermittelt.

Ein Schwingungsdämpfer verfügt hinsichtlich seiner Dämpfkraft über eine besonders gute Qualität, wenn die Federarbeit des Reifens bezogen auf die äußere Anregung des Rades ein Minimum aufweist. Diese Eigenschaft bietet den Vorteil, dass nur eine Erhöhung der Federarbeit des Reifens überprüft und ausgewertet werden muss.

Daraus ergibt sich u. a. die Möglichkeit, dass in einem weiteren Speicher für eine Reifendrucküberwachung der funktionale Zusammenhang zwischen Reifenfederrate und Reifendruck ablegt ist, wobei aus der Reifenkraft und der Relativbewegung des Rades zur Radaufstandsfläche die Federrate des Reifens und aus der berechneten Federrate der momentane Reifendruck bestimmt wird. Bei einer erfindungsgemäßen System muss also nicht direkt der Reifendruck gemessen werden. Eine direkte Reifendruckmessung ist technisch deutlich schwieriger umsetzbar.

Anhand der folgenden Figurenbeschreibung soll die Erfindung näher erläutert werden.

Es zeigt:
- Fig. 1: Prinzipdarstellung der Baugruppen für das Verfahren;
- Fig. 2: mathematisches Ersatzschaubild zur Fig. 1.

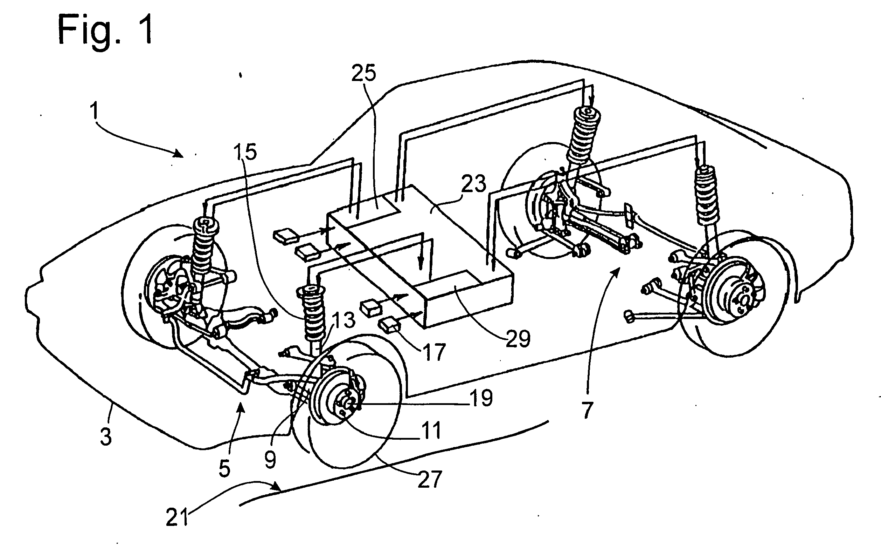

Die Fig. 1 zeigt ein Linienmodell eines Kraftfahrzeugs, dessen Fahrzeugaufbau 3 von einer Vorder- 5 und einer Hinterachse 7 getragen wird. Beide Achsen verfügen über aufbauseitig gelagerte Lenker 9 mit Radträger 11, wobei zwischen den Achsen und dem Fahrzeugaufbau jeweils Schwingungsdämpfer 13 und Fahrzeugtragfedern 15 angeordnet sind. Am Fahrzeugaufbau ist mindestens ein Sensor 17 befestigt, der ein aufbauseitiges Vertikalbeschleunigungssignal bereitstellt. Des weiteren ist an einem Lenker oder dem Radträger ein Beschleunigungssensor 19 angeordnet, der eine Relativbewegung des Lenkers 9 oder des Radträgers 11 zur Radaufstandsfläche 21 in ein radseitiges Beschleunigungssignal umsetzt. Signalleitungen der Sensoren sind an eine Rechnereinheit 23 angeschlossen. Die Rechnereinheit umfasst einen ersten Speicher 25, indem die Federarbeit mindestens eines Reifens 27 des Rades einer der Achsen bezogen auf eine definierte Anregung in Verbindung mit einem neuwertigen Schwingungsdämpfer abgelegt ist.

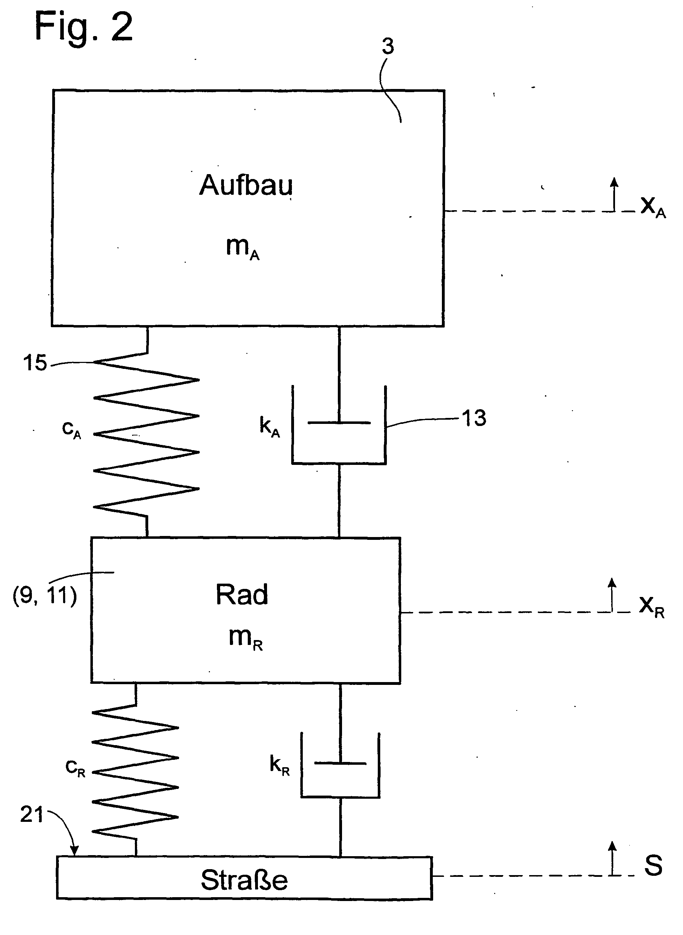

Die Fig. 2 stellt ein Ersatzschaubild des Fahrzeugs nach Fig. 1 dar. Der Fahrzeugaufbau 3, vereinfacht als Viertelaufbau pro Achshälfte angenommen, kann eine vertikale Schwingbewegung zu dem Rad ausführen, dessen Reifen 27 in Grenzen elastisch ist und deshalb eine Feder mit der Federrate CR und eine Dämpffunktion kR ausführt. Die Federrate der Fahrzeugtragfeder 15 lautet CA und die Dämpffunktion des Schwingungsdämpfers kA. Damit bildet der Fahrzeugaufbau zusammen mit dem Rad einen Zweimassenschwinger.

Aus der Summe der Masse mA des Aufbaus multipliziert mit der aufbauseitigen Vertikalbeschleunigung und der Rad und ungefederten Achsmasse multipliziert mit der vertikalen Radbeschleunigung berechnet sich eine auf den Reifen 27 wirkende Reifenkraft. Die Bewegung der Radmasse, insbesondere der Federungsweg der Radnabe zur Fahrbahn, multipliziert mit der auf den Reifen wirkenden Kraft stellt die momentane Federarbeit des Reifens dar. Der Federungsweg der Radnabe zur Fahrbahnoberfläche wird durch eine Integralrechnung des radseitigen Beschleunigungssignals zur Fahrbahnoberfläche ermittelt. Aus dem Integral des Produkts aus Reifenkraft und Relativweg der Radnabe zur Fahrbahnoberfläche über der Zeit wird die Federarbeit des Reifens über eines größeres Zeitspektrum ermittelt. Diese Federarbeit wird mit einem Wert im Speicher 25, der einen bestimmten Anregung der Fahrbahnoberfläche zugeordnet ist, verglichen. Sobald die berechnete Federarbeit des Reifens eine bestimmten Abweichung zu dem Wert der gespeicherten Federarbeit des Reifen aufweist, ist von einem defekten Schwingungsdämpfers auszugehen. Es hat sich herausgestellt, dass ein Schwingungsdämpfer hinsichtlich seiner Dämpfkraftcharakteristik dann besonders gute Fahrwerkseigenschaften wirksam werden lässt, wenn die Federarbeit des Reifens bezogen auf die äußere Anregung des Reifens ein Minimum aufweist. Diese Eigenschaft vereinfacht die Überprüfung des Schwingungsdämpfer, da der Fall, dass die Federarbeit des Reifens im Laufe der Betriebsdauer des Schwingungsdämpfers auch kleiner werden kann, ausgeschlossen ist.

Die Federkonstante des Reifens ist abhängig von der Reifenkonstruktion und vom Reifendruck. In einem weiteren Speicher 29 ist für eine Reifendrucküberwachung der funktionale Zusammenhang zwischen Reifenfederrate CR und Reifendruck ablegt, wobei aus der Reifenkraft und der. Relativbewegung des Rades zur Radaufstandsfläche 21 die Federrate des Reifens und aus der berechneten Federrate der momentane Reifendruck bestimmt wird.

## Patentansprüche

1. Verfahren zur Überprüfung von einem Schwingungsdämpfer in Kraftfahrzeugen, wobei der Schwingungsdämpfer zusammen mit einem Reifen eines Rades an der Fahrzeugachse einer Hubanregung ausgesetzt ist, die den Schwingungsdämpfer eine bestimmte Dämpfkraft erzeugen lässt, wobei in einem Speicher ein mit der Dämpfkraft korrelierender Parameter gespeichert ist, der mit dem Parameter bei der Schwingungsdämpferprüfung verglichen wird, wobei eine Abweichung zwischen dem gemessenen Wert und dem abgespeicherten Wert oberhalb eines definierten Grenzwertes als Hinweis auf einen defekten Schwingungsdämpfer anzusehen ist,
**dadurch gekennzeichnet,**
**dass** die Federarbeit des Reifens (27) bezogen auf eine definierte Anregung in Verbindung mit einem neuwertigen Schwingungsdämpfer (13) als Parameter im Speicher (25) vorliegt und die Federarbeit des Reifens (27) bei der Überprüfung des Schwingungsdämpfers (13) erfasst wird, wobei ab einer bestimmten Abweichung der festgestellten Federarbeit von der gespeicherten Federarbeit des Reifens (27) von einem defekten Schwingungsdämpfer ausgegangen wird.

2. Verfahren nach Anspruch 1,
**dadurch gekennzeichnet,**
**dass** aus der Bewegung der Radmasse (9; 11) zur Radaufstandsfläche (21) sowie der Fahrzeugaufbaubewegung und der anteiligen Aufbaumasse die Federarbeit des Reifens (27) ermittelt wird.

3. Verfahren nach Anspruch 2,
**dadurch gekennzeichnet,**
**dass** eine Fahrbahnoberfläche (21) als Radaufstandsfläche verwendet wird.

4. Verfahren nach Anspruch 1,
**dadurch gekennzeichnet,**
**dass** eine im Fahrzeug angeordnete Sensorik (19) zur Erfassung der Parameter für die Bestimmung der Federarbeit des Reifens (27) verwendet wird.

5. Verfahren nach Anspruch 4,
**dadurch gekennzeichnet,**
**dass** durch eine Integralrechnung eines radseitiges Beschleunigungssignal der Relativweg der ungefederte Masse des Rades (11) und der Fahrzeugachse (11) zur Radaufstandsfläche (21) ermittelt wird.

6. Verfahren nach Anspruch 4,
**dadurch gekennzeichnet,**
**dass** ein aufbauseitiges Beschleunigungssignal in Verbindung mit einer definierten anteiligen Masse des Fahrzeugaufbaus (3) zur Berechnung der auf den Reifen (27) wirkenden Reifenkraft verwendet wird.

7. Verfahren nach Anspruch 5,
**dadurch gekennzeichnet,**
**dass** aus dem Integral des Produkts aus Reifenkraft und Relativweg des Rades (9) über der Zeit die Federarbeit des Reifens (27) ermittelt wird.

8. Verfahren nach Anspruch 1,
**dadurch gekennzeichnet,**
**dass** der Schwingungsdämpfer (13) hinsichtlich seiner Dämpfkraft eine besonders gute Qualität aufweist, wenn die Federarbeit des Reifens bezogen auf die äußere Anregung des Rades ein Minimum aufweist.

9. Verfahren nach Anspruch 6,
**dadurch gekennzeichnet,**
**dass** in einem weiteren Speicher (29) für eine Reifendrucküberwachung der funktionale Zusammenhang zwischen Reifenfederrate und Reifendruck abgelegt ist, wobei aus der Reifenkraft und der Relativbewegung des Rades zur Radaufstandsfläche die Federrate des Reifens (27) und aus der berechneten Federrate der momentane Reifendruck bestimmt wird.

## Claims

1. Method for inspecting a shock absorber in motor vehicles, the shock absorber together with a tyre of a wheel on the vehicle axle being subject to a stroke movement excitation which allows the shock absorber to generate a certain damping force, a parameter which corresponds to the damping force being stored in a memory, which parameter is compared with the parameter when the shock absorber is inspected, a deviation between the measured value and the stored value above a defined limit value being regarded as an indication of a defective shock absorber,
**characterized**
**in that** the spring work of the tyre (27) based on a defined excitation in conjunction with a new shock absorber (13) is stored as a parameter in the memory (25), and the spring work of the tyre (27) is measured when the shock absorber (13) is inspected, it being assumed that a shock absorber is defective if the deviation of the detected spring work from the stored spring work of the tyre (27) is above a certain value.

2. Method according to Claim 1,
**characterized**
**in that** the spring work of the tyre (27) is determined from the movement of the wheel mass (9; 11) relative to the wheel contact area (21) and from the vehicle body movement and the proportional body mass.

3. Method according to Claim 2,
**characterized**
**in that** an underlying surface (21) is used as the wheel contact area.

4. Method according to Claim 1,
**characterized**
**in that** a sensor system (19) which is arranged in the vehicle is used to detect the parameters for determining the spring work of the tyre (27).

5. Method according to Claim 4,
**characterized**
**in that** the travel of the unsprung mass of the wheel (11) and of the vehicle axle (11) relative to the wheel contact area (21) is determined by means of an integral calculation of a wheel acceleration signal.

6. Method according to Claim 4,
**characterized**
**in that** a body acceleration signal is used in conjunction with a defined proportional mass of the vehicle body (3) to calculate the tyre force acting on the tyres (27).

7. Method according to Claim 5,
**characterized**
**in that** the spring work of the tyre (27) is determined from the integral with respect to time of the product of the tyre force and the relative travel of the wheel (9).

8. Method according to Claim 1,
**characterized**
**in that** the shock absorber (13) is of good quality with regard to its damping force if the spring work of the tyre based on the external excitation of the wheel is at a minimum.

9. Method according to Claim 6,
**characterized**
**in that** for tyre pressure monitoring, the functional relationship between the tyre spring rate and the tyre pressure is stored in a further memory (29), the spring rate of the tyre (27) being determined from the tyre force and the movement of the wheel relative to the wheel contact area, and the instantaneous tyre pressure being determined from the calculated spring rate.

## Revendications

1. Procédé de contrôle d'un amortisseur de vibrations dans des véhicules automobiles, sachant que l'amortisseur est exposé, conjointement avec un pneumatique d'une roue sur l'essieu du véhicule, à une sollicitation verticale qui fait produire par l'amortisseur une force d'amortissement donnée, sachant qu'un paramètre corrélé à la force d'amortissement est mémorisé dans une mémoire, paramètre qui est comparé au paramètre enregistré lors du contrôle de l'amortisseur, et sachant qu'un écart entre la valeur mesurée et la valeur mémorisée doit être considéré, au-dessus d'une valeur limite définie, comme indiquant un amortisseur défectueux, **caractérisé en ce que** le travail élastique du pneumatique (27) relativement à une sollicitation définie en association avec un amortisseur neuf (13) est présent comme paramètre dans la mémoire (25), et on enregistre le travail élastique du pneumatique (27) lors du contrôle de l'amortisseur (13), sachant qu'on suppose que l'amortisseur est défectueux à partir d'un écart donné du travail élastique enregistré par rapport au travail élastique mémorisé du pneumatique (27).

2. Procédé selon la revendication 1, **caractérisé en ce qu'**on détermine le travail élastique du pneumatique (27) à partir du mouvement de la masse (9 ; 11) de la roue par rapport à la surface d'appui (21) de la roue ainsi que du mouvement de la carrosserie du véhicule et de la masse proportionnelle de la carrosserie.

3. Procédé selon la revendication 2, **caractérisé en ce qu'**on utilise une surface de chaussée (21) comme surface d'appui de la roue.

4. Procédé selon la revendication 1, **caractérisé en ce que**, pour enregistrer les paramètres pour la détermination du travail élastique du pneumatique (27), on utilise un équipement de détection (19) disposé dans le véhicule.

5. Procédé selon la revendication 4, **caractérisé en ce qu'**on détermine par un calcul intégral d'un signal d'accélération côté roue la course relative de la masse non suspendue de la roue (11) et de l'essieu (11) du véhicule par rapport à la surface d'appui (21) de la roue.

6. Procédé selon la revendication 4, **caractérisé en ce que**, pour calculer la force agissant sur le pneumatique (27), on utilise un signal d'accélération côté carrosserie associé à une masse proportionnelle définie de la carrosserie (3) du véhicule.

7. Procédé selon la revendication 5, **caractérisé en ce qu'**on détermine le travail élastique du pneumatique (27) d'après l'intégrale en fonction du temps du produit de la force sollicitant le pneumatique et de la course relative de la roue (9).

8. Procédé selon la revendication 1, **caractérisé en ce que** la force d'amortissement de l'amortisseur (13) est d'une qualité particulièrement satisfaisante si le travail élastique du pneumatique relativement à la sollicitation externe de la roue est minimal.

9. Procédé selon la revendication 6, **caractérisé en ce que** la relation fonctionnelle entre la constante de rappel et la pression du pneumatique est déposée dans une autre mémoire (29) pour la surveillance de la pression du pneumatique, sachant que la constante de rappel du pneumatique (27) est déterminée à partir de la force sollicitant le pneumatique et du mouvement relatif de la roue par rapport à la surface d'appui de la roue, et la pression momentanée du pneumatique est déterminée à partir de la constante de rappel calculée.
